# EUROPÄISCHE PATENTSCHRIFT

(11) **EP 3 198 903 B1**
(45) Veröffentlichungstag und Bekanntmachung des Hinweises auf die Patenterteilung: **06.03.2019**
(21) Anmeldenummer: 15777873.9
(22) Anmeldetag: 22.09.2015
(51) Int. Cl.: H04W 8/14, H04W 8/18, H04W 4/50

(54) **VERFAHREN UND VORRICHTUNGEN ZUM BEREITSTELLEN EINES SUBSKRIPTIONSPROFILS AUF EINEM MOBILEN ENDGERÄT**
METHOD AND DEVICES FOR PROVIDING A SUBSCRIPTION PROFILE ON A MOBILE TERMINAL
PROCÉDÉ ET DISPOSITIFS DE MISE À DISPOSITION D'UN PROFIL D'ABONNEMENT SUR UN TERMINAL MOBILE

(30) Priorität: 23.09.2014 DE 102014014078
(43) Veröffentlichungstag der Anmeldung: 02.08.2017
(73) Patentinhaber: Giesecke+Devrient Mobile Security GmbH, 81677 München (DE)
(72) Erfinder: AHRENS, Carsten, 81929 München (DE); MÜLLER, Bernd, 81825 München (DE); DINGER, Jens, 81827 München (DE); MORAWIETZ, Andreas, 81377 München (DE); HUBER, Ulrich, 81475 München (DE)
(86) Internationale Anmeldenummer: PCT/EP2015/001880
(87) Internationale Veröffentlichungsnummer: WO 2016/045786

(56) Entgegenhaltungen:
- EP-A1- 2 701 359
- GB-A- 2 522 044
- US-A1- 2013 303 122
- US-A1- 2014 057 558

## Beschreibung

### Gebiet der Erfindung

Die Erfindung betrifft die Kommunikation über Mobilfunknetze im Allgemeinen und insbesondere Verfahren und Vorrichtungen zum Bereitstellen eines Subskriptionsprofils auf einem mobilen Endgerät zur Kommunikation über ein Mobilfunknetz.

### Hintergrund der Erfindung

Das Kommunizieren mittels eines mobilen Endgeräts, beispielsweise mittels eines Mobiltelefons, über ein Mobilfunknetzwerk (auch als PLMN [Public Land Mobile Network] bezeichnet), das von einem Netzbetreiber (auch als MNO [Mobile Network Operator] bezeichnet) betrieben wird, erfordert in der Regel, dass das mobile Endgerät mit einem Sicherheitselement bzw. Teilnehmeridentifikationsmodul, beispielsweise in Form einer SIM-Karte, zur sicheren Aufnahme von Subskriptionsberechtigungsdaten ("Subscription Credentials") ausgestattet ist, die in der Regel Teil eines Subskriptionsprofils sind und den Benutzer des mobilen Endgeräts gegenüber dem Mobilfunknetzwerk eindeutig identifizieren und authentisieren. Derartige Subskriptionsberechtigungsdaten, beispielsweise eine IMSI (International Mobile Subscriber Identity) und ein Authentisierungsschlüssel Kᵢ, sind in der Vergangenheit üblicherweise im Rahmen einer sogenannten "Personalisierung" in der sicheren Umgebung des Sicherheitselementherstellers auf dem Sicherheitselement hinterlegt worden.

Während in der Vergangenheit die große Mehrzahl von Sicherheitselementen in Form von SIM-Karten in einem mobilen Endgerät einfach ausgetauscht werden konnte, gibt es seit einiger Zeit mehr und mehr Sicherheitselemente, die fest in einem mobilen Endgerät verbaut werden. Ein solches fest in einem mobilen Endgerät verbautes Sicherheitselement, das dem Fachmann insbesondere unter dem Begriff "Embedded SIM" oder "Embedded UICC (eUICC)" bekannt ist, kann in der Regel nicht mehr in einer sicheren Umgebung beim Hersteller des Sicherheitselements personalisiert werden, da insbesondere das Einsatzgebiet des Sicherheitselements nicht im Voraus bekannt ist.

Somit besteht ein Bedarf nach verbesserten Verfahren und Vorrichtungen zum Personalisieren eines mobilen Endgeräts, d.h. zum Bereitstellen eines Subskriptionsprofils auf einem mobilen Endgerät, insbesondere dem Sicherheitselement davon.

Aus der EP 2 701 359 A1 geht ein Verfahren zum Personalisieren eines unpersonalisierten Endgeräts mit Teilnehmeridentitätsdaten hervor, wobei die heruntergeladenen Teilnehmeridentitätsdaten auf dem Endgerät verbleiben.

Die US 2014/0057558 A1 betrifft das Übertragen von identischen SIM-Daten von einem ersten Endgerät an ein zweites Endgerät. Die SIM-Daten werden dabei nicht verändert und nach dem Übertragen von dem ersten Endgerät gelöscht.

### Zusammenfassung der Erfindung

Die vorstehende Aufgabe wird gemäß der vorliegenden Erfindung durch den jeweiligen Gegenstand der unabhängigen Ansprüche gelöst. Bevorzugte Ausgestaltungen der Erfindung werden in den abhängigen Ansprüchen definiert.

Gemäß einem ersten Aspekt der Erfindung wird ein Verfahren zum Bereitstellen eines Subskriptionsprofils auf einem mobilen Endgerät zur Kommunikation über ein Mobilfunknetzwerk bereitgestellt. Dabei umfasst das Verfahren die folgenden Schritte: das Einbuchen eines ersten mobilen Endgeräts mit einem ersten Subskriptionsprofil in ein Mobilfunknetzwerk; das Herunterladen eines zweiten Subskriptionsprofils über das Mobilfunknetzwerk auf das erste mobile Endgerät; und das Weiterleiten des zweiten Subskriptionsprofils vom ersten mobilen Endgerät über einen Kommunikationskanal an ein zweites mobiles Endgerät.

Vorzugsweise umfasst das Verfahren nach dem Schritt des Weiterleitens des zweiten Subskriptionsprofils vom ersten mobilen Endgerät über den Kommunikationskanal an das zweite mobile Endgerät den weiteren Schritt des Einbuchens des zweiten mobilen Endgeräts mit dem zweiten Subskriptionsprofil in ein Mobilfunknetzwerk.

Gemäß bevorzugter Ausführungsformen der Erfindung ist das Mobilfunknetzwerk, in das sich das zweite mobile Endgerät mit dem zweiten Subskriptionsprofil einbucht, das Mobilfunknetzwerk, über das das zweite Subskriptionsprofil auf das erste mobile Endgerät heruntergeladen worden ist.

Vorzugsweise ist der Kommunikationskanal zwischen dem ersten mobilen Endgerät und dem zweiten mobilen Endgerät ein NFC-Kommunikationskanal, ein WiFi-Kommunikationskanal, ein Bluetooth-Kommunikationskanal, ein optischer Kommunikationskanal und/ oder ein akustischer Kommunikationskanal.

Gemäß bevorzugter Ausführungsformen der Erfindung wird das zweite Subskriptionsprofil von einem Server über das Mobilfunknetzwerk auf das erste mobile Endgerät heruntergeladen.

Vorzugsweise ist der logische Kommunikationskanal zwischen dem Server und dem zweiten mobilen Endgerät kryptographisch gesichert.

Gemäß bevorzugter Ausführungsformen der Erfindung ist der logische Kommunikationskanal zwischen dem Server und dem zweiten mobilen Endgerät dadurch kryptographisch gesichert, dass das zweite Subskriptionsprofil vom Server mit einem Schlüssel verschlüsselt wird, der auf dem Server in Verbindung mit einem Identifier des zweiten mobilen Endgeräts und/oder eines Sicherheitselements des zweiten mobilen Endgeräts hinterlegt ist.

Gemäß einem zweiten Aspekt der Erfindung wird ein System zum Bereitstellen eines Subskriptionsprofils auf einem mobilen Endgerät zur Kommunikation über ein Mobilfunknetzwerk bereitgestellt. Dabei umfasst das System: ein erstes mobiles Endgerät, das dazu ausgestaltet ist, sich mit einem ersten Subskriptionsprofil in ein Mobilfunknetzwerk einzubuchen; einen Server zum Herunterladen eines zweiten Subskriptionsprofils über das Mobilfunknetzwerk auf das erste mobile Endgerät; und ein zweites mobiles Endgerät, das dazu ausgestaltet ist, dass das zweite Subskriptionsprofil vom ersten mobilen Endgerät über einen Kommunikationskanal an das zweite mobile Endgerät weitergeleitet wird.

Wie der Fachmann erkennt, lassen sich die vorstehend beschriebenen bevorzugten Ausgestaltungen sowohl im Rahmen des ersten Aspekts der Erfindung, d.h. im Rahmen des Verfahrens zum Bereitstellen eines Subskriptionsprofils auf einem mobilen Endgerät zur Kommunikation über ein Mobilfunknetzwerk, als auch im Rahmen des zweiten Aspekts der Erfindung, d.h. im Rahmen eines Systems zum Bereitstellen eines Subskriptionsprofils auf einem mobilen Endgerät zur Kommunikation über ein Mobilfunknetzwerk, vorteilhaft implementieren.

Weitere Merkmale, Vorteile und Aufgaben der Erfindung gehen aus der folgenden detaillierten Beschreibung mehrerer Ausführungsbeispiele und Ausführungsalternativen hervor. Es wird auf die Zeichnungen verwiesen, in denen zeigen:
- Fig. 1: eine schematische Darstellung eines Kommunikationssystems mit einem Mobilfunksystem in Kommunikation mit einem ersten mobilen Endgerät und einem zweiten mobilen Endgerät, die unterschiedliche Aspekte der vorliegenden Erfindung illustriert, und
- Fig. 2: eine schematische Darstellung eines bevorzugten Ablaufs beim Bereitstellen eines Subskriptionsprofils auf dem zweiten mobilen Endgerät von Figur 1.

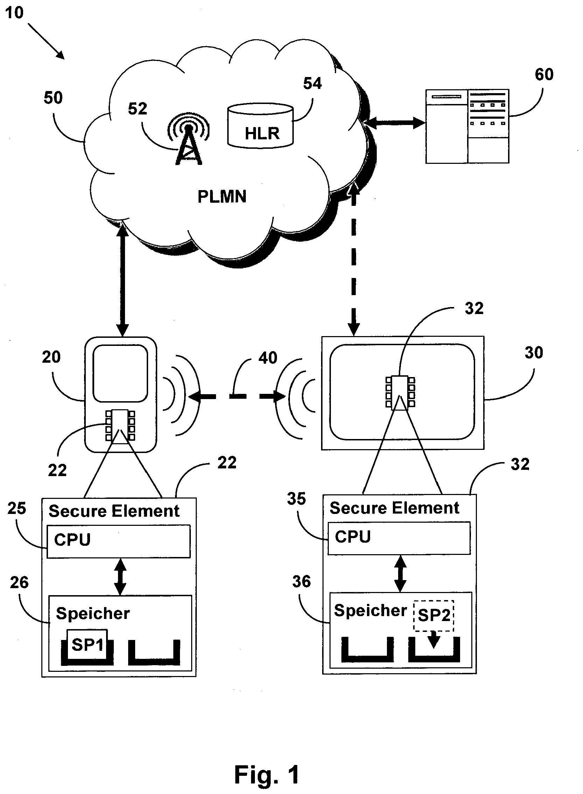

Figur 1 zeigt eine schematische Darstellung der Komponenten eines Kommunikationssystems 10 sowie einige der Kommunikationsverbindungen zwischen diesen Komponenten, das unterschiedliche Aspekte der vorliegenden Erfindung illustriert. Obgleich in der nachstehenden detaillierten Beschreibung auf ein "mobiles" Endgerät Bezug genommen wird, wird der Fachmann erkennen, dass die vorliegende Erfindung vorteilhaft im Zusammenhang mit jeder Art von Endgerät implementiert werden kann, das dazu ausgestaltet ist, über ein mobiles oder zelluläres Kommunikationsnetzwerk zu kommunizieren, also auch mit Endgeräten, deren Standort sich praktisch nicht ändert. Mit anderen Worten: das hierein verwendete Attribut "mobil" bezieht sich auf die Fähigkeit des Endgeräts über ein mobiles oder zelluläres Kommunikationsnetzwerk zu kommunizieren.

In Figur 1 sind beispielhaft ein erstes mobiles Endgerät 20 und eine zweites mobiles Endgerät 30 dargestellt. Vorzugsweise verfügen das erste mobile Endgerät 20 und das zweite mobile Endgerät 30 jeweils über ein Sicherheitselement ("Secure Element") 22 bzw. 32 zum sicheren Speichern und Verarbeiten von Daten, die beispielsweise das erste mobile Endgerät 20 und das zweite mobile Endgerät 30 in einem Mobilfunknetz eindeutig identifizieren. Wie dies in Figur 1 angedeutet ist, handelt es sich bei dem ersten mobilen Endgerät 20 vorzugsweise um ein Smartphone und bei dem zweiten mobilen Endgerät 30 um einen Tablet-Computer. Der Fachmann wird jedoch erkennen, dass das erste mobile Endgerät 20 und das zweite mobile Endgerät 30 gemäß der vorliegenden Erfindung ebenfalls in Form von anderen Vorrichtungen implementiert werden können, die dazu eingerichtet sind, über ein Mobilfunknetzwerk zu kommunizieren, wie beispielsweise ein Notebook, ein TV-System, eine Set-Top-Box, ein Verkaufsautomat, ein Kraftfahrzeug, eine Überwachungskamera, eine Sensorvorrichtung und dergleichen.

Gemäß bevorzugter Ausführungsformen der Erfindung sind das Sicherheitselement 22 und das Sicherheitselement 32 als eine eUICC (embedded Universal Integrated Circuit Card) mit einer darauf implementierten SIM-Applikation ausgestaltet, d.h. als ein Sicherheitselement, das fester Bestandteil des ersten mobilen Endgeräts 20 bzw. des zweiten mobilen Endgeräts 30 ist und in einem Mobilfunknetzwerk für die eindeutige und sichere Identifizierung des Benutzers bzw. Teilnehmers und für die Bereitstellung unterschiedlicher Funktionen und Mehrwertdienste verwendet wird. Alternativ können das Sicherheitselement 22 und/oder das Sicherheitselement 32 als eine UICC (Universal Integrated Circuit Card) oder SIM-Karte (Subscriber Identity Module) ausgestaltet sein, die dem Fachmann als eine der zurzeit am häufigsten verwendeten Formen eines Sicherheitselements bekannt ist. Der Fachmann wird jedoch erkennen, dass andere Arten von Sicherheitselementen, die je nach Generation und Typ des zugrunde liegenden Mobilfunkstandards als USIM, R-UIM, ISIM und dergleichen bezeichnet werden, ebenfalls von der vorliegenden Erfindung umfasst werden.

Gemäß weiterer bevorzugter Ausführungsformen der Erfindung können das Sicherheitselement 22 und/oder das Sicherheitselement 32 als eine Kombination aus Hard- und Softwarekomponenten in einem vertrauenswürdigen Teil eines Betriebssystems einer zentralen Prozessoreinheit des ersten mobilen Endgeräts 30 bzw. des zweiten mobilen Endgeräts 30 ausgebildet sein, die dem Fachmann auch als gesicherte Laufzeitumgebung ("Trusted Execution Environment"; TEE) bekannt ist. Das Sicherheitselement 22 und/oder das Sicherheitselement 32 können dann beispielsweise innerhalb einer solchen gesicherten Laufzeitumgebung des ersten mobilen Endgeräts 20 bzw. des zweiten mobilen Endgeräts 30 in Form von darin ablaufenden Programmen, sogenannten Trustlets® ausgebildet sein.

Das erste mobile Endgerät 20 und das zweite mobile Endgerät 30 sind dazu ausgestaltet, über die Luftschnittstelle mit einem Mobilfunknetzwerk 50 (auch kurz als "Mobilfunknetz" oder als "Public Land Mobile Network" [PLMN] bezeichnet) zu kommunizieren. Hierzu verfügen das erste mobile Endgerät 20 und das zweite mobile Endgerät 30 in der Regel jeweils über eine geeignet ausgestaltete Antenne (in Figur 1 nicht dargestellt) zum Senden und Empfangen von Radiowellen.

Nachstehend werden bevorzugte Ausführungsformen der Erfindung im Zusammenhang mit einem Mobilfunknetzwerk 50 gemäß dem GSM-Standard ("Global Standard for Mobile Communications") beschrieben, der in einer Vielzahl von ETSI-Spezifikationen spezifiziert ist. Der Fachmann wird jedoch erkennen, dass die vorliegende Erfindung auch im Zusammenhang mit anderen Mobilfunknetzen vorteilhaft eingesetzt werden kann. Derartige Netze umfassen Mobilfunknetze der dritten Generation (3GPP), wie UMTS (Universal Mobile Telecommunications System), Mobilfunknetze der vierten Generation (4G), wie LTE (Long Term Evolution), sowie andere Mobilfunknetze, wie CDMA und dergleichen.

Wie dies dem Fachmann bekannt ist, umfasst ein gemäß dem GSM-Standard aufgebautes Mobilfunknetz bzw. PLMN im Allgemeinen ein BSS ("Base Station Subsystem"), das aus einer Vielzahl von BTS ("Base Transceiver Station") besteht, die jeweilige Funkzellen des PLMN definieren und mit einem BSC ("Base Station Controller") verbunden sind. Üblicherweise handelt es sich bei dem BSC um einen einer Vielzahl von BSC, die mit einem gemeinsamen MSC ("Mobile Switching Center") kommunizieren. Häufig ist eine lokale Datenbank, die VLR ("Visitor Location Register") genannt wird, Teil des MSC, um Informationen über die Mobilfunkteilnehmer vorzuhalten, die sich momentan in den Funkzellen befinden, die von einem MSC versorgt werden (d.h. der von einem MSC abgedeckte Bereich). Das MSC stellt im Wesentlichen dieselbe Funktionalität wie eine Vermittlungsstelle im Festnetz (publicswitched telephone network; PSTN) bereit und steht in Kommunikation mit einem HLR ("Home Location Register"), bei dem es sich um die primäre Datenbank des PLMN handelt, in der Informationen zur Anmeldung bzw. Authentisierung der Mobilfunkteilnehmer gespeichert sind. Hierzu hat das HLR üblicherweise Zugriff auf ein AUC ("Authentication Center"). Wie dies dem Fachmann bekannt ist, können die Kommunikationsverbindungen zwischen den vorstehend beschriebenen Komponenten eines PLMNs auf proprietären und/oder offenen Standards basieren. Die verwendeten Protokolle können beispielsweise SS7- oder IP-basiert sein. Wie die Netzwerkkomponenten als separate oder zusammengefasste Einheiten ausgebildet sind und wie die Schnittstellen zwischen diesen Komponenten ausgebildet sind, ist Sache des MNO, so dass die vorstehende Beschreibung lediglich als beispielhaft zu verstehen ist.

Der Fachmann wird erkennen, dass, obgleich die vorstehend beschriebenen Funktionseinheiten eines herkömmlichen Mobilfunknetzes gemäß dem GSM-Standard in anderen oder zukünftigen Mobilfunkstandards andere Namen aufweisen können, die zugrundeliegenden Prinzipien im Wesentlichen gleich sind und diese daher von der Erfindung ebenfalls umfasst werden. Der Übersichtlichkeit halber sind von den vorstehend beschriebenen Komponenten eines Mobilfunknetzes lediglich die folgenden in der schematischen Darstellung von Figur 1 gezeigt: ein beispielhaftes BTS 52 sowie ein HLR 54 für das Mobilfunknetz 50.

Wie sich dies Figur 1 entnehmen lässt, steht das Mobilfunknetz 50 zumindest zeitweise in Kommunikation mit einem Hintergrundsystem 60, vorzugsweise in Form eines geeignet ausgestalteten "Subscription Management" Servers (SM Server), wie dies nachstehend im Detail beschrieben wird.

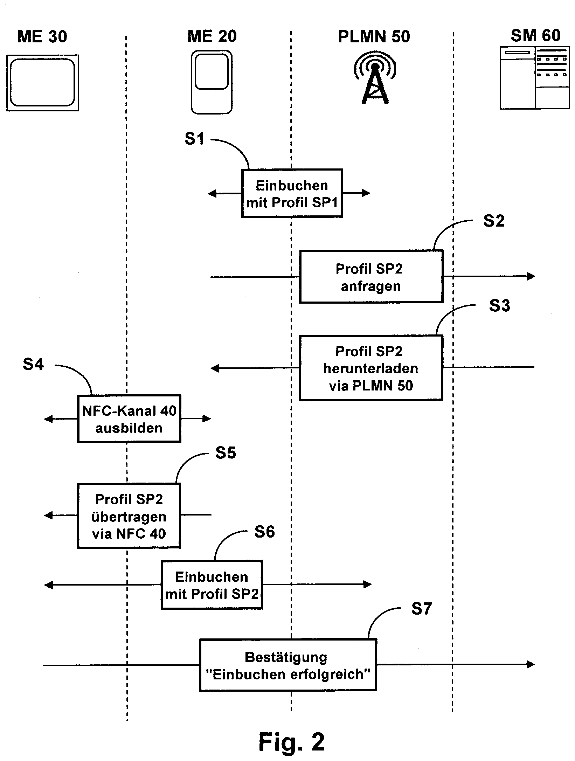

Wie sich dies den jeweils vergrößerten Ansichten der Sicherheitselemente 22 und 32 in Figur 1 entnehmen lässt, umfassen diese vorzugsweise jeweils eine zentrale Verarbeitungseinheit bzw. einen zentralen Prozessor ("central processing unit"; CPU) 25 bzw. 35. Vorzugsweise ist der Prozessor 25 bzw. 35 derart ausgestattet, dass Applikationen auf dem Prozessor 25 bzw. 35 ausgeführt werden können, die vorzugsweise zumindest einige der Features zum Bereitstellen eines Subskriptionsprofils auf dem zweiten mobilen Endgerät 30 bereitstellen, wie dies nachstehend im Zusammenhang mit Figur 2 detailliert beschrieben wird. Derartige Applikationen sind vorzugsweise in Form von Java Applets implementiert.

Das Sicherheitselement 22 und das Sicherheitselement 32 umfassen vorzugsweise ferner jeweils eine Speichereinheit 26 bzw. 36, die vorzugsweise als eine nicht-flüchtige, wiederbeschreibbare Speichereinheit, z.B. in Form eines Flash-Speichers, implementiert ist. Dabei ist die Speichereinheit 26 bzw. 36 dazu ausgestaltet, wenigstens ein Subskriptionsprofil aufzunehmen, beispielsweise die Subskriptionsprofile SP1 bzw. SP2, wie dies in Figur 1 schematisch angedeutet ist.

In der schematischen Darstellung von Figur 1 ist das Subskriptionsprofil SP1 bereits in die Speichereinheit 26 des Sicherheitselements 22 des ersten mobilen Endgeräts 20 eingebracht, was insbesondere bedeutet, dass beispielsweise die CPU 25 des Sicherheitselements 22 auf das Subskriptionsprofil SP1 zugreifen kann. Vorzugsweise enthält das Subskriptionsprofil SP1 Daten, die es dem Sicherheitselement 22 und dem ersten mobilen Endgerät 20 ermöglichen, sich in das Mobilfunknetz 50 einzubuchen und über dieses zu kommunizieren, d.h. Daten, wie Subskriptionsberechtigungsdaten ("Subscription Credentials"), einen MNO-spezifischen Authentisierungsalgorithmus und/oder dergleichen.

In der schematischen Darstellung von Figur 1 ist die Speichereinheit 36 des Sicherheitselements 32 des zweiten mobilen Endgeräts 30 zur Aufnahme des Subskriptionsprofils SP2 bereit, was nachstehend unter weiterer Bezugnahme auf Figur 2 im Detail beschrieben wird. Vorzugsweise enthält das Subskriptionsprofil SP2 Daten, die es dem Sicherheitselement 32 und dem zweiten mobilen Endgerät 30 ermöglichen, sich in das Mobilfunknetz 50 einzubuchen und über dieses zu kommunizieren, d.h. Daten, wie Subskriptionsberechtigungsdaten ("Subscription Credentials"), einen MNO-spezifischen Authentisierungsalgorithmus und/oder dergleichen. Alternativ kann das Subskriptionsprofil SP2 Daten enthalten, die es dem Sicherheitselement 32 und dem zweiten mobilen Endgerät 30 ermöglichen, sich in anderes Mobilfunknetz als das Mobilfunknetz 50 einzubuchen, beispielsweise in das Mobilfunknetz eines anderen Mobilfunknetzbetreibers.

Figur 2 zeigt einen erfindungsgemäß bevorzugten Ablauf beim Bereitstellen des Subskriptionsprofils SP2 auf dem zweiten mobilen Endgerät 30.

In Schritt S1 von Figur 2 bucht sich das erste mobile Endgerät 20 mit dem bestehenden Subskriptionsprofil SP1 in das Mobilfunknetz 50 ein. Dies erfolgt im Rahmen eines Authentisierungsvorgangs unter Verwendung der Subskriptionsberechtigungsdaten, die Teil des Subskriptionsprofils SP1 sind, wie beispielsweise eine IMSI und/oder ein Authentisierungsschlüssel Kᵢ.

Nachdem sich das erste mobile Endgerät 20 erfolgreich in das Mobilfunknetz 50 eingebucht hat und über dieses kommunizieren kann, fragt das erste mobile Endgerät 20 in Schritt S2 von Figur 2 über das Mobilfunknetz 50 beim SM-Server 60 ein Subskriptionsprofil SP2 für das zweite mobile Endgerät 30 an. Erfindungsgemäß ist denkbar, dass mittels einer auf dem ersten mobilen Endgerät 20 laufenden Applikation mit einer graphischen Benutzeroberfläche ein Benutzer diesen Vorgang anstoßen kann und insbesondere das Subskriptionsprofil S2 für das zweite mobile Endgerät 30 auswählen kann.

Auf diese Anfrage hin lädt der SM-Server 60 in Schritt S3 von Figur 2 das vom Benutzer für das zweite mobile Endgerät 30 ausgewählte Subskriptionsprofil SP2 über das Mobilfunknetzwerk 50 auf das erste mobile Endgerät 20. Dabei kann der SM-Server 60 dem ersten mobilen Endgerät 20 vertrauen, da sich dies gegenüber dem Mobilfunknetzwerk 50 authentifiziert hat.

In Schritt S4 von Figur 2 wird ein Kommunikationskanal 40 zwischen dem ersten mobilen Endgerät 20 und dem zweiten mobilen Endgerät 30 ausgebildet. Da dem Benutzer in der Regel sowohl das erste mobile Endgerät 20 als auch das zweite mobile Endgerät 30 zur Verfügung stehen und er die beiden Endgeräte 20, 30 zusammenführen kann, kann es sich bei dem Kommunikationskanal 40 um einen Kommunikationskanal mit kurzer Reichweite handeln. Vorzugsweise handelt es sich bei diesem Kommunikationskanal 40 um einen NFC-Kanal, Bluetooth-Kanal, WiFi-Kanal oder dergleichen. Alternativ ist auch ein Kommunikationskanal 40 in Form einer optischen oder einer akustischen Datenübertragung zwischen dem ersten mobilen Endgerät 20 und dem zweiten mobilen Endgerät 30 denkbar. Beispielsweise können die Daten auf einem Display des ersten mobilen Endgeräts 20 dargestellt werden, z.B. in Form eines QR-Codes, und mittels einer Kamera des zweiten mobilen Endgeräts 30 erfasst werden.

Nachdem in Schritt S4 von Figur 2 der Kommunikationskanal zwischen dem ersten mobilen Endgerät 20 und dem zweiten mobilen Endgerät 30 ausgebildet worden ist, wird in Schritt S5 von Figur 2 das Subskriptionsprofil SP2 vom ersten mobilen Endgerät 20 über den Kommunikationskanal 40 an das zweite mobile Endgerät 30 übertragen.

Daraufhin kann sich in Schritt S6 von Figur 2 das zweite mobile Endgerät bzw. dessen Sicherheitselement 32 mit dem Subskriptionsprofil SP2 und den darin enthaltenen Subskriptionsberechtigungsdaten, wie beispielsweise eine IMSI und/ oder ein Authentisierungsschlüssel Kᵢ, in das Mobilfunknetz 50 einbuchen. Wie bereits oben erwähnt, wird von der Erfindung ebenfalls der Fall erfasst, dass die Subskriptionsberechtigungsdaten des Subskriptionsprofils SP2 den Zugang zu einem anderen Mobilfunknetz ermöglichen, beispielsweise das Mobilfunknetz eines anderen Mobilfunknetzbetreibers.

Falls sich das mobile Endgerät 30 in Schritt S6 erfolgreich in das Mobilfunknetz 50 eingebucht hat, kann in Schritt S7 von Figur 2 das zweite mobile Endgerät 30 über das Mobilfunknetz 50 eine entsprechende Bestätigung an den SM-Server 60 senden.

Wie der Fachmann erkennen wird, ist es zur Erzielung der durch die vorliegende Erfindung bereitgestellten Vorteile nicht erforderlich, dass die Schritte von Figur 2 in der dort dargestellten Reihenfolge erfolgen. Beispielsweise ist es im Rahmen der Erfindung denkbar, dass der Schritt S4 zum Ausbilden des Kommunikationskanals 40 zwischen dem ersten mobilen Endgerät 20 und dem zweiten mobilen Endgerät 30 bereits vor dem Herunterladen des Subskriptionsprofils SP2 auf das erste mobile Endgerät 20 erfolgt.

Die Schritte S3 bis S5 von Figur 2 zum Herunterladen des Subskriptionsprofils vom SM-Server 60 über das Mobilfunknetz 50 auf das erste mobile Endgerät 20 und vom ersten mobilen Endgerät 20 über den Kommunikationskanal 40 auf das zweite mobile Endgerät 30 können als ein logischer Kommunikationskanal zwischen dem SM-Server 60 und dem zweiten mobilen Endgerät 30 betrachtet werden, bei dem das erste mobile Endgerät 20 lediglich zum Weiterleiten der Daten dient. Vorzugsweise ist der logische Kommunikationskanal zwischen dem SM-Server 60 und dem zweiten mobilen Endgerät 30 kryptographisch gesichert.

Die kryptographische Sicherung des logischen Kommunikationskanals zwischen dem SM-Server 60 und dem zweiten mobilen Endgerät 30 kann beispielsweise dadurch erreicht werden, dass vorzugsweise auf dem Sicherheitselement 32 des zweiten mobilen Endgeräts 30 ein geheimer Schlüssel hinterlegt ist, der ebenfalls auf dem SM-Server 60 in Verbindung mit einem Identifier des zweiten mobilen Endgeräts 30 bzw. des Sicherheitselements 32, z.B. einer Chip-ID, hinterlegt ist. In diesem Fall würde sich das zweite mobile Endgerät 30 in einem zusätzlichen, nicht in Figur 2 dargestellten Schritt gegenüber dem SM-Server 60 identifizieren und der SM-Server 60 das Subskriptionsprofil SP2 mit dem diesem Identifier zugeordneten Schlüssel verschlüsseln. Wie der Fachmann erkennen wird, kann in diesem Fall der Kommunikationskanal 40 zwischen dem ersten mobilen Endgerät 20 und dem zweiten mobilen Endgerät 30 bereits zu einem früheren Zeitpunkt ausgebildet werden, um dem ersten mobilen Endgerät 20 den Identifier, beispielsweise eine Chip-ID der Sicherheitselements 32 des zweiten mobilen Endgeräts 30 mitzuteilen. Hierbei ist vorstellbar, dass das erste mobile Endgerät 20 den Identifier des zweiten mobilen Endgeräts 30 bzw. des Sicherheitselements 32 im Rahmen der Anfrage des zweiten Subskriptionsprofils SP2 über das Mobilfunknetzwerk 50 beim SM-Server 60 (siehe Schritt S2 von Figur 2) anfordert.

## Patentansprüche

1. Verfahren zum Bereitstellen eines Subskriptionsprofils (SP2) auf einem mobilen Endgerät (30) zur Kommunikation über ein Mobilfunknetzwerk, wobei das Verfahren die folgenden Schritte umfasst:
das Einbuchen eines ersten mobilen Endgeräts (20) mit einem ersten Subskriptionsprofil (SP1) in ein Mobilfunknetzwerk (50), wobei das erste Subskriptionsprofil (SP1) Subskriptionsberechtigungsdaten zum eindeutigen Identifizieren und Authentifizieren des ersten mobilen Endgeräts (20) gegenüber dem Mobilfunknetzwerk (50) enthält; das Herunterladen eines zweiten Subskriptionsprofils (SP2) über das Mobilfunknetzwerk (50) auf das erste mobile Endgerät (20) nach erfolgreichem Einbuchen in das Mobilfunknetzwerk (50), wobei das zweite Subskriptionsprofil (SP2) Subskriptionsberechtigungsdaten zum eindeutigen Identifizieren und Authentifizieren eines zweiten mobilen Endgeräts (30) gegenüber dem Mobilfunknetzwerk (50) oder einem anderen Mobilfunknetzwerk enthält; und
das Weiterleiten des zweiten Subskriptionsprofils (SP2) vom ersten mobilen Endgerät (20) über einen Kommunikationskanal (40) an das zweite mobiles Endgerät (30).

2. Verfahren nach Anspruch 1, wobei das Verfahren nach dem Schritt des Weiterleitens des zweiten Subskriptionsprofils (SP2) vom ersten mobilen Endgerät (20) über den Kommunikationskanal (40) an das zweite mobile Endgerät (30) den weiteren Schritt des Einbuchens des zweiten mobilen Endgeräts (30) mit dem zweiten Subskriptionsprofil (SP2) in das Mobilfunknetzwerk (50) oder das andere Mobilfunknetzwerk umfasst.

3. Verfahren nach Anspruch 2, wobei das Mobilfunknetzwerk, in das sich das zweite mobile Endgerät (30) mit dem zweiten Subskriptionsprofil (SP2) einbucht, das Mobilfunknetzwerk (50) ist, über das das zweite Subskriptionsprofil (SP2) auf das erste mobile Endgerät (20) heruntergeladen worden ist.

4. Verfahren nach einem der vorhergehenden Ansprüche, wobei der Kommunikationskanal (40) zwischen dem ersten mobilen Endgerät (20) und dem zweiten mobilen Endgerät (30) ein NFC-Kommunikationskanal, ein WiFi-Kommunikationskanal, ein Bluetooth-Kommunikationskanal, ein optischer Kommunikationskanal und/oder ein akustischer Kommunikationskanal ist.

5. Verfahren nach einem der vorhergehenden Ansprüche, wobei das zweite Subskriptionsprofil (SP2) von einem Server (60) über das Mobilfunknetzwerk (50) auf das erste mobile Endgerät (20) heruntergeladen wird.

6. Verfahren nach Anspruch 5, wobei ein Kommunikationskanal zwischen dem Server (60) und dem zweiten mobilen Endgerät (30) kryptographisch gesichert ist.

7. Verfahren nach Anspruch 6, wobei der Kommunikationskanal zwischen dem Server (60) und dem zweiten mobilen Endgerät (30) dadurch kryptographisch gesichert ist, dass das zweite Subskriptionsprofil (SP2) vom Server (60) mit einem Schlüssel verschlüsselt wird, der auf dem Server (60) in Verbindung mit einem Identifier des zweiten mobilen Endgeräts (30) und/oder eines Sicherheitselements (32) des zweiten mobilen Endgeräts (30) hinterlegt ist.

8. Sicherheitselement (22), eingerichtet, ein Verfahren nach Anspruch 1 auszuführen, sodass das zweite Subskriptionsprofil (SP2) an das Sicherheitselement (22) bereitgestellt wird, wobei die Schritte des Einbuchens und des Herunterladens unter Zuhilfenahme des Sicherheitselements (22) des ersten mobilen Endgeräts durchgeführt werden.

9. Mobiles Endgerät (20) mit einem Sicherheitselement (22) nach Anspruch 8.

10. System zum Bereitstellen eines Subskriptionsprofils (SP2) auf einem mobilen Endgerät (30) zur Kommunikation über ein Mobilfunknetzwerk, wobei das System umfasst:
ein erstes mobiles Endgerät (20), das dazu ausgestaltet ist, sich mit einem ersten Subskriptionsprofil (SP1) in ein Mobilfunknetzwerk (50) einzubuchen, wobei das erste Subskriptionsprofil (SP1) Subskriptionsberechtigungsdaten zum eindeutigen Identifizieren und Authentifizieren des ersten mobilen Endgeräts (20) gegenüber dem Mobilfunknetzwerk (50) enthält;
einen Server (60) zum Herunterladen eines zweiten Subskriptionsprofils (SP2) über das Mobilfunknetzwerk (50) auf das erste mobile Endgerät (20) nach erfolgreichem Einbuchen in das Mobilfunknetzwerk (50), wobei das zweite Subskriptionsprofil (SP2) Subskriptionsberechtigungsdaten zum eindeutigen Identifizieren und Authentifizieren eines zweiten mobilen Endgeräts (30) gegenüber dem Mobilfunknetzwerk (50) oder einem anderen Mobilfunknetzwerk enthält; und
das zweite mobile Endgerät (30), das dazu ausgestaltet ist, dass das zweite Subskriptionsprofil (SP2) vom ersten mobilen Endgerät (20) über einen Kommunikationskanal (40) an das zweite mobile Endgerät (30) weitergeleitet wird und um sich mit dem zweiten Subskriptionsprofil in das Mobilfunknetz einzubuchen.

## Claims

1. A method for supplying a subscription profile (SP2) on a mobile terminal (30) for communication via a mobile communication network, wherein the method comprises the following steps of:
- logging a first mobile terminal (20) with a first subscription profile (SP1) into a mobile communication network (50), wherein the first subscription profile (SP1) includes subscription authorization data for the unique identification and authentication of the first mobile terminal (20) vis-à-vis the mobile communication network (50);
- downloading a second subscription profile (SP2) via the mobile communication network (50) to the first mobile terminal (20) after successfully logging into the mobile communication network (50), wherein the second subscription profile (SP2) includes subscription authorization data for the unique identification and authentication of a second mobile terminal (30) vis-à-vis the mobile communication network (50) or a different mobile communication network; and
- forwarding the second subscription profile (SP2) from the first mobile terminal (20) via a communication channel (40) to the second mobile terminal (30).

2. The method according to claim 1, wherein the method comprises, after the step of forwarding the second subscription profile (SP2) from the first mobile terminal (20) via the communication channel (40) to the second mobile terminal (30), the further step of logging the second mobile terminal (30) with the second subscription profile (SP2) into the mobile communication network (50) or the other mobile communication network.

3. The method according to claim 2, wherein the mobile communication network into which the second mobile terminal (30) logs with the second subscription profile (SP2) is the mobile communication network (50) via which the second subscription profile (SP2) has been downloaded to the first mobile terminal (20).

4. The method according to any of the preceding claims, wherein the communication channel (40) between the first mobile terminal (20) and the second mobile terminal (30) is an NFC communication channel, a WiFi communication channel, a Bluetooth communication channel, an optical communication channel and/or an acoustic communication channel.

5. The method according to any of the preceding claims, wherein the second subscription profile (SP2) is downloaded from a server (60) via the mobile communication network (50) to the first mobile terminal (20).

6. The method according to claim 5, wherein a communication channel between the server (60) and the second mobile terminal (30) is cryptographically secured.

7. The method according to claim 6, wherein the communication channel between the server (60) and the second mobile terminal (30) is cryptographically secured by the second subscription profile (SP2) being encrypted by the server (60) with a key that is deposited on the server (60) in connection with an identifier of the second mobile terminal (30) and/or a security element (32) of the second mobile terminal (30).

8. A security element (22), arranged for executing a method according to claim 1, so that the second subscription profile (SP2) is made available to the security element (22), wherein the steps of logging in and of downloading are carried out with the aid of the security element (22) of the first mobile terminal.

9. A mobile terminal (20) with a security element (22) according to claim 8.

10. A system for providing a subscription profile (SP2) on a mobile terminal (30) for communication via a mobile communication network, wherein the system comprises:
a first mobile terminal (20) adapted to log into a mobile communication network (50) with a first subscription profile (SP1), wherein the first subscription profile (SP1) includes subscription authorization data for the unique identification and authentication of the first mobile terminal (20) vis-à-vis the mobile communication network (50);
a server (60) for downloading a second subscription profile (SP2) via the mobile communication network (50) to the first mobile terminal (20) after successfully logging into the mobile communication network (50), wherein the second subscription profile (SP2) includes subscription authorization data for the unique identification and authentication of a second mobile terminal (30) vis-à-vis the mobile communication network (50) or a different mobile communication network; and
the second mobile terminal (30) which is adapted to forward the second subscription profile (SP2) from the first mobile terminal (20) via a communication channel (40) to the second mobile terminal (30) and to log into the mobile communication network with the second subscription profile.

## Revendications

1. Procédé de mise à disposition d'un profil d'abonnement (SP2) sur un terminal mobile (30) pour la communication par l'intermédiaire d'un réseau radio mobile, le procédé comprenant les étapes suivantes :
l'enregistrement d'un premier terminal mobile (20) ayant un premier profil d'abonnement (SP1) dans un réseau radio mobile (50), cependant que le premier profil d'abonnement (SP1) contient des données d'autorisation d'abonnement pour l'identification et l'authentification univoques du premier terminal (20) mobile vis-à-vis du réseau radio mobile (50) ; le téléchargement d'un deuxième profil d'abonnement (SP2) par l'intermédiaire du réseau radio mobile (50) sur le premier terminal mobile (20) après enregistrement abouti dans le réseau radio mobile (50), cependant que le deuxième profil d'abonnement (SP2) contient des données d'autorisation d'abonnement pour l'identification et l'authentification univoques d'un deuxième terminal mobile (30) vis-à-vis du réseau radio mobile (50) ou d'un autre réseau radio mobile ; et
le transfert du deuxième profil d'abonnement (SP2) du premier terminal mobile (20) par l'intermédiaire d'un canal de communication (40) au deuxième terminal mobile (30).

2. Procédé selon la revendication 1, cependant que le procédé, après l'étape du transfert du deuxième profil d'abonnement (SP2) du premier terminal mobile (20) par l'intermédiaire du canal de communication (40) au deuxième terminal mobile (30) comprend l'étape supplémentaire de l'enregistrement du deuxième terminal mobile (30) ayant le deuxième profil d'abonnement (SP2) dans le réseau radio mobile (50) ou l'autre réseau radio mobile.

3. Procédé selon la revendication 2, cependant que le réseau radio mobile dans lequel s'enregistre le deuxième terminal mobile (30) ayant le deuxième profil d'abonnement (SP2) est le réseau radio mobile (50) par l'intermédiaire duquel le deuxième profil d'abonnement (SP2) a été téléchargé sur le premier terminal mobile (20).

4. Procédé selon une des revendications précédentes, cependant que le canal de communication (40) entre le premier terminal mobile (20) et le deuxième terminal mobile (30) est un canal de communication NFC, un canal de communication WiFi, un canal de communication Bluetooth, un canal optique de communication et/ou un canal acoustique de communication.

5. Procédé selon une des revendications précédentes, cependant que le deuxième profil d'abonnement (SP2) est téléchargé par un serveur (60) par l'intermédiaire du réseau radio mobile (50) sur le premier terminal mobile (20).

6. Procédé selon la revendication 5, cependant qu'un canal de communication entre le serveur (60) et le deuxième terminal mobile (30) est cryptographiquement sécurisé.

7. Procédé selon la revendication 6, cependant que le canal de communication entre le serveur (60) et le deuxième terminal mobile (30) est cryptographiquement sécurisé par le fait que le deuxième profil d'abonnement (SP2) est crypté par le serveur (60) avec une clé qui est stockée sur le serveur (60) en relation avec un identifiant du deuxième terminal mobile (30) et/ou d'un élément de sécurité (32) du deuxième terminal mobile (30).

8. Elément de sécurité (22) conçu pour exécuter un procédé selon la revendication 1, de telle sorte que le deuxième profil d'abonnement (SP2) est mis à disposition à l'élément de sécurité (22), cependant que les étapes de l'enregistrement et du téléchargement sont effectuées en ayant recours à l'élément de sécurité (22) du premier terminal mobile.

9. Terminal mobile (20) ayant un élément de sécurité (22) selon la revendication 8.

10. Système de mise à disposition d'un profil d'abonnement (SP2) sur un terminal mobile (30) pour la communication par l'intermédiaire d'un réseau radio mobile, cependant que le système comprend :
un premier terminal mobile (20) conçu pour s'enregistrer avec un premier profil d'abonnement (SP1) dans un réseau radio mobile (50), cependant que le premier profil d'abonnement (SP1) contient des données d'autorisation d'abonnement pour l'identification et l'authentification univoques du premier terminal (20) mobile vis-à-vis du réseau radio mobile (50) ; un serveur (60) pour le téléchargement d'un deuxième profil d'abonnement (SP2) par l'intermédiaire du réseau radio mobile (50) sur le premier terminal mobile (20) après enregistrement abouti dans le réseau radio mobile (50), cependant que le deuxième profil d'abonnement (SP2) contient des données d'autorisation d'abonnement pour l'identification et l'authentification univoques d'un deuxième terminal mobile (30) vis-à-vis du réseau radio mobile (50) ou d'un autre réseau radio mobile ; et
le deuxième terminal mobile (30) qui est conçu pour ce que le deuxième profil d'abonnement (SP2) soit transféré du premier terminal mobile (20) par l'intermédiaire d'un canal de communication (40) au deuxième terminal mobile (30), et pour s'enregistrer avec le deuxième profil d'abonnement dans le réseau radio mobile.
